Europäisches Patentamt

European Patent Office

Office européen des brevets

(19)

(11) Numéro de publication: **0 047 705**
**B1**

(12) **FASCICULE DE BREVET EUROPEEN**

(45) Date de publication du fascicule du brevet:
**30.05.84**

(21) Numéro de dépôt: **81401400.7**

(22) Date de dépôt: **09.09.81**

(51) Int. Cl.³: **C 08 J 3/00**, C 08 J 3/02,
C 09 D 7/14

(54) Procédé de préparation de suspensions de polymères, suspensions desdits polymères et applications desdites suspensions.

(30) Priorité: **09.09.80 FR 8019404**

(43) Date de publication de la demande:
**17.03.82 Bulletin 82/11**

(45) Mention de la délivrance du brevet:
**30.05.84 Bulletin 84/22**

(84) Etats contractants désignés:
**BE CH DE GB LI**

(56) Documents cités:
**FR - A - 2 386 402**

(73) Titulaire: **COMPAGNIE FRANCAISE DE RAFFINAGE
Société anonyme dite:, 5, rue Michel-Ange,
F-75781 Paris Cedex 16 (FR)**

(72) Inventeur: **Claude, Bruno, Saint Martin du Manoir,
F-76290 Montivilliers (FR)**
Inventeur: **Labaig, Jean-Jacques, 176, Bd Clémenceau,
F-76600 Le Havre (FR)**
Inventeur: **Martinez, Christian, 64 Bois Châtaignier-Saint
Laurent de Brévedent, F-76700 Harfleur (FR)**

(74) Mandataire: **Jolly, Jean-Pierre et al, Cabinet
BROT 83, rue d'Amsterdam, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un procédé de préparation de suspensions de polymères. Elle concerne également lesdites suspensions et leurs applications.

La préparation de suspensions de polymères peut être effectuée de différentes manières.

On peut, par exemple, comme décrit dans des articles de Messieurs Tze Cheng et Memering, d'une part, et MC Sharry, Howell et Memering, d'autre part, parus respectivement dans «Plastics World» de Janvier 1968 (pages 28 et suivantes), et dans «Plastiques Modernes et Elastomères» d'avril 1968 (pages 71 et suivantes), obtenir des dispersions de polyéthylène à partir de poudres de polyéthylène dont la granulométrie est au minimum de 8 micromètres et peut atteindre 30 micromètres la poudre de polyéhylène étant dispersée dans de l'eau ou dans un composé organique. Ces dispersions ont toutefois l'inconvénient de décanter et sont difficiles à réhomogénéiser, ce qui est un inconvénient pour leur emploi, notamment pour le revêtement de supports. Les supports pouvant être revêtus à l'aide de dispersions sont variés: papier, métaux ou textiles. Dans l'article paru dans «Plastics World», il est indiqué que l'épaisseur de la pellicule de polyéthylène sur un support métallique revêtu à l'aide de telles suspensions est de l'ordre du millième de pouce, soit donc environ 25 micromètres.

Bien que la granulométrie du polyéthylène contenu dans ces dispersions soit faible, la Demanderesse a constaté, lors de précédents travaux, qu'il est préférable d'utiliser une suspension de polymère dans un liquide organique obtenue par refroidissement brutal d'une solution dudit polymère. La préparation de suspensions de polymères par refroidissement brutal est décrite dans le brevet français no. 945 962.

L'utilisation de telles suspensions permet d'obtenir une couche de polymère, sur le support, d'une épaisseur très faible pouvant être voisine du micromètre. Cette utilisation conduit donc à une économie de matière première.

La Demanderesse a en outre constaté qu'en utilisant de telles suspensions, la couche de polymère dont le support est revêtu, après évaporation du liquide organique, mais avant fusion du polymère, adhère déjà au support, ce qui ne peut être obtenu avec les dispersions décrites dans les articles précités. De plus, l'utilisation de ces suspensions permet d'obtenir, après fusion du polymère, une pellicule uniforme et continue, bien que l'épaisseur de celle-ci soit très faible, ce qui ne peut non plus être obtenu avec des dispersions où la granulométrie du polymère est de l'ordre de 8 à 30 micromètres. L'avantage de ces suspensions obtenues par refroidissement est qu'elles restent stables.

Ces précédents travaux de la Demanderesse ont conduit au dépôt de la demande de brevet français no. 2 386 402, qui concerne un procédé de revêtement d'un support par une couche de polymère. Ce procédé comprend:

a) la préparation d'une suspension de polymère dans un liquide organique,

b) l'enduction du support par ladite suspension de polymères,

c) l'élimination du liquide organique, et il est caractérisé en ce que la suspension de polymère est obtenue par trempe d'une solution dudit polymère.

La Demanderesse avait constaté qu'à partir d'une certaine concentration, pour un polymère donné, la suspension n'était plus homogène, ce qui nuisait à son utilisation pour l'enduction de supports. C'est ainsi que, pour un polyéthylène haute densité, cette concentration limite était voisine de 8% en poids.

Poursuivant ces travaux, la Demanderesse a trouvé le moyen d'obtenir des suspensions plus concentrées, homogènes et stables de polymères, ce qui évite la manipulation de grandes quantités de solvant.

Le but de la présente invention est donc l'obtention de suspension concentrées et stables de polymères.

A cet effet, l'invention a pour objet un procédé de préparation d'une suspension concentrée d'au moins un polymère, ce procédé comprenant une première étape de préparation d'une première suspension d'au moins un polymère dans un liquide organique, par trempe d'une solution dudit polymère et étant caractérisé en ce que, dans une seconde étape, on ajoute à la première suspension obtenue lors de la première étape, une poudre d'au moins un polymère, identique ou non au précédent, ladite addition conduisant à la formation d'une suspension finale concentrée.

Pour la préparation de suspensions selon l'invention, la Demanderesse a utilisé notamment le polyéthylène. Elle a également utilisé des copolymères greffés, obtenus par polymérisation de l'éthylène ou du propylène, et greffage d'une faible quantité d'acide acrylique. Ce greffage peut être effectué par extrusion d'une poudre de polymère additionnée de l'acide acrylique, ladite poudre ayant été auparavant irradiée dans un accélérateur d'électrons.

Les liquides utilisables pour obtenir la première suspension, peuvent être les liquides organiques habituellement employés comme solvants des homopolymères ou des copolymères de l'éthylène et du propylène, notamment des hydrocarbures, tels que les hydrocarbures paraffiniques ou cycloparaffiniques, notamment l'hexane, le cyclohexane, l'isooctane etc . . .

La concentration du polymère utilisé dans la première suspension dépend du polymère et du liquide organique utilisé. Ainsi, dans le cas où le liquide organique est le cyclohexane et le polymère du polyéthylène haute densité, greffé ou non par l'acide acrylique, la concentration du polymère est de préférence inférieure à 8% en poids. La Demanderesse a en effet constaté qu'au-dessus de cette limite de 8%, la suspension n'est plus homogène. Pour d'autres couples polymère-liquide organique, la concentration limit peut être inférieure ou supérieure à 8% en poids.

La première suspension utilisable dans le procédé selon l'invention est obtenue par trempe d'une solution de polymère. La Demanderesse a constaté que, pour obtenir des suspensions de polymère utilisables dans le procédé selon l'invention, il est nécessaire que, lors de la trempe, la température de la solution soit abaissée brusquement à une température qui dépend du polymère et du solvant utilisé. La température de la solution avant la trempe n'est pas critique et doit être suffisante pour que le polymère soit dissous dans le solvant.

Dans le cas du polyéthylène basse densité ou du polyéthylène haute densité, greffé ou non par de l'acide acrylique, et du cyclohexane, il est préférable que la température de trempe, et donc de précipitation, soit égale ou inférieure à 50°C.

Dans le cas du polypropylène, greffé par de l'acide acrylique, il est préférable que la température de trempe soit inférieure ou égale à 40°C.

La deuxième étape du procédé selon l'invention consiste à ajouter sous agitation à la première suspension d'au moins un polymère une poudre d'au moins un polymère à une température qui peut être comprise entre 20 et 60°C.

Les polymères pulvérulents sont ajoutés à la première suspension peuvent être identiques ou différents de ceux utilisés pour obtenir la première suspension.

La Demanderesse a ainsi utilisé des poudres de copolymères greffés, obtenus par polymérisation de l'éthylène ou du propylène, et greffage d'une faible quantité d'acide acrylique.

La poudre du polymère ajouté à la première suspension pour obtenir la suspension finale peut avoir une granulométrie comprise entre 5 et 80 micromètres.

La poudre du polymère est ajoutée en quantité telle que la suspension finale ait la concentration totale du (ou des) polymère(s) désirée, cette concentration pouvant être comprise par exemple entre 10 et 25% en poids.

Les suspensions finales obtenues sont homogènes et décantent très peu, ce qui n'est pas le cas lorsque l'on disperse une poudre dans le solvant.

Les suspensions selon l'invention peuvent être notamment utilisées pour revêtir un support.

Les suspensions selon l'invention permettent de revêtir une gamme étendue de supports, comme les métaux, d'autres polymères, le verre, le papier, les tissus.

L'enduction du support peut être effectuée par des moyens connus dans la technique. Elle peut être effectuée par exemple, par enduction d'un film par un rouleau de transfert.

Le liquide organique contenu dans la suspension doit ensuite être éliminé du support enduit par séchage du support, par exemple, par chauffage dans un tunnel chauffant.

Après élimination du liquide organique, l'épaisseur de la couche de polymère dont le support est ainsi revêtu peut être voisine du micromètre. Si le support a été porté à une température suffisante pour que le polymère soit fondu, la couche est continue.

Pour le polyéthylène et le polypropylène, cette température doit être supérieure respectivement à 150 et 180°C. Dans le cas d'un film métallique revêtu de polymère, la fusion de la couche de polymère peut être obtenue en calandrant le film sur un cylindre porté à une température suffisante.

Les complexes bicouches constitués par un film d'aluminium revêtu d'une couche de polymère greffé peuvent être utilisés pour la fermeture des récipients. Les complexes peuvent être fixés sur les récipients par une opération de thermoscellage.

Le thermoscellage consiste à appliquer le complexe sur le récipient pendant un temps très court (quelques secondes) à une température qui dépend de la nature du complexe et du récipient. La température doit être suffisante pour que le complexe soit pelable. Si la température est trop élevée, il n'est plus possible de peler le complexe.

Pour un récipient en polyéthylène, la température de thermoscellage peut être comprise entre 160 et 210°C.

Pour un récipient en polypropylène, la température de thermoscellage peut être comprise entre 200 et 250°C.

Dans le cas d'une utilisation des complexes bicouches pour la fermeture de récipients, on peut avantageusement prévoir une languette sur la capsule ou l'opercule, pour faciliter l'arrachage de celle-ci.

L'arrachage peut, par ailleurs, être partiel, de telle sorte que la capsule reste solidaire du récipient; ainsi, on peut refermer le récipient avec ladite capsule, après utilisation.

De façon générale, les complexes bicouches conviennent pour le bouchage, de récipients possédant des formes quelconques, tels que barquettes, bouteilles. Ils sont bien adaptés pour former des fermetures de bouteilles contenant des produits liquides (lait stérilisé, jus de fruits).

Les complexes bicouches constitutés par un film d'aluminium revêtu d'une couche de polymère greffé peuvent être utilisés pour la fabrication de complexes tricouches. On peut, en effet, coller ainsi le film d'aluminium sur un film de polyéthylène ou de polypropylène.

Les exemples qui suivent, concernent la préparation de suspensions de polymères conformément au procédé selon l'invention et l'utilisation des suspensions ainsi préparées pour le revêtement de supports.

Exemple 1

Cet exemple concerne la préparation de trois suspensions A, B et C conformément au procédé selon l'invention:

Préparation de la suspension A

On a préparé d'abord une suspension A1, par dissolution dans de l'heptane à 150°C d'un polymère P1 qui est un polyéthylène haute densité de masses moléculaires en poids $M\overline{w}$ = 120 000 et, en nombre, $M\overline{n}$ = 15 000 de densité 0,960, contenant 1% en poids d'acide acrylique greffé.

Le polymère est ajouté en quantité telle que la concentration de la solution est de 5% en poids.

On obtient la suspension A1 en refroidissant brusquement à 30°C la solution.

La suspension finale A est obtenue en dispersant par agitation dans la suspension A1 à 20°C une poudre d'un polymère P2 identique à P1 et dont la granulométrie est inférieure ou égale à 50 micromètres.

La poudre est ajoutée en quantité telle que la concentration finale en polymère soit de 18% en poids.

On constate que la suspension A décante très lentement et est de toute façon très facile à réhomogénéiser. Après 24 heures, la suspension se stabilise à un niveau de décantation inférieur à 2%.

Par contre, si on disperse directement la poudre du polymère P2 décrit ci-dessus dans de l'heptane, on n'obtient pas de suspension homogène.

Préparation de la suspension B

On a d'abord préparé une suspension B1, par dissolution dans de l'heptane à 150°C de deux polymères P3 et P4:

a) P3 est un polyéthylène greffé identique au polymère P1 utilisé pour préparer la suspension A, il est ajouté en quantité telle que sa concentration dans la solution soit de 3% en poids;

b) P4 est un polyéthylène basse densité de masses moléculaires $M\overline{\overline{w}} = 65\,000$ et $M\overline{\overline{n}} = 16\,000$ et de densité de 0,960, il est ajouté en quantité telle que sa concentration dans la solution soit de 3% en poids.

On obtient la suspension B1 en refroidissant brusquement à 30°C la solution.

La suspension finale B est obtenue en dispersant par agitation dans la suspension B1 à 20°C une poudre constituée d'un mélange comprenant 50% en poids de chacun des polymères P3 et P4 utilisés pour la préparation de la suspension B1.

La poudre est ajoutée en quantité telle que la concentration finale en polymère soit de 18% en poids.

On constate que la suspension B décante très lentement et est de toute façon très facile réhomogénéiser. Après 24 heures, la suspension est stable à un niveau de décantation inférieur à 2%.

Par contre, si on disperse directement la poudre du polymère P2 décrit ci-dessus dans de l'heptane, on n'obtient pas de suspension homogène.

Préparation de la suspension C

On a d'abord préparé une suspension C1, par dissolution dans de l'heptane à 150°C de deux polymères P6 et P7:

a) P6 est un polyéthylène greffé identique au polymère P1 utilisé pour la préparation de la suspension A, il est ajouté en quantité telle que sa concentration dans la solution soit de 1,8% en poids;

b) P7 est un polypropylène de grade 2 (selon la norme ASTM D 1238, charge 2,16 kg à 230°C) contenant 1% en poids d'acide acrylique greffé, il est ajouté en quantité telle que sa concentration dans la solution soit de 4,2% en poids.

On obtient la suspension C1 en refroidissant brusquement à 40°C la suspension.

La suspension finale C est obtenue en dispersant par agitation dans la suspension C1 à 20°C une poudre constituée d'un mélange à 30%, en poids de P6 et à 70% en poids de P7.

La poudre est ajoutée en quantité telle que la concentration finale en polymère soit de 18% en poids.

On constate que la suspension C décante très lentement et est de toute façon très facile à réhomogénéiser. Après 24 heures, la suspension est stable à un niveau de décantation inférieur à 2%.

Par contre, si on disperse directement la poudre du polymère décrit ci-dessus dans de l'heptane on n'obtient pas de suspension homogène.

Exemple 2

Cet exemple concerne la préparation de complexes bicouches et de complexes tricouches avec les suspensions obtenues dans l'exemple 1.

A) Préparation des complexes bicouches

On enduit avec la suspension et à l'aide d'un rouleau de transfert une feuille d'aluminium d'une épaisseur de 50 micromètres.

On fait passer ensuite la feuille enduite dans un tunnel à 120°C pour éliminer le solvant, puis sur un cylindre porté à 240°C pour fondre le dépôt.

On a préparé ainsi trois complexes bicouches qui figurent dans le tableau I ci-après.

Tableau I

| complexe bicouche | suspension utilisée | épaisseur de la couche de polymère(s) en micromètres |
|---|---|---|
| AA | A | 3 |
| BB | B | 6 |
| CC | C | 4 |

B) Préparation de complexes tricouches

On calandre à 240°C, entre deux cylindres, les complexes AA, BB et CC avec un film de polymère d'une épaisseur de 50 micromètres.

On a préparé ainsi trois complexes tricouches, qui figurent dans le tableau II ci-après.

Tableau II

| Complexe tricouche | Complexe bicouche utilisé | Nature du polymère du film |
|---|---|---|
| AAA | AA | polyéthylène (1) |
| BBB | BB | polyéthylène (1) |
| CCC | CC | polypropylène (2) |

(1) Polyéthylène haute densité, de masses moléculaires, en poids, $M\overline{w} = 120\,000$ et, en nombre, $M\overline{n} = 15\,000$, et de densité 0,960.

(2) Polypropylène de grade 2 (selon norme ASTM D 1238, charge 2,16 kg à 230°C) .

Exemple 3

Cet exemple concerne des essais d'étanchéité et de pelabilité effectués sur des récipients obturés par les complexes bicouches préparés dans l'exemple 2.

Une bouteille en polyéthylène haute densité (d = 0,960) ou en polypropylène est remplie d'eau, puis bouchée à l'aide du complexe scellé sur son goulot. Le goulot est rond, son diamètre est de 44 mm et son épaisseur est de 2,5 mm.

Pour les complexes AA et BB, on a utilisé une bouteille polyéthylène.
Pour le complexe CC, on a utilisé une bouteille en polypropylène.
Le scellement d'effectue en appliquant le complexe sur le goulot de la bouteille à l'aide d'un plateau chauffant, pendant deux secondes, et avec une pression telle que la bouteille se comprime de 2 mm.
Le plateau chauffant est porté à 200°C pour les complexes AA et BB et à 220°C pour le complexe CC.

A) Essais d'étanchéité
La bouteille est ensuite couchée sur le sol et l'on vérifie qu'elle est étanche au niveau de la capsule en lui appliquant le poids d'une personne.
Les bouteilles scellées avec les complexes ont été trouvées étanches.

b) Essais de pelabilité
On a effectué deux sortes d'essais, des essais qualitatifs et des essais quantitatifs.
1. Essais qualitatifs
Les bouteilles scellées utilisées lors des essais d'étanchéité ont été soumises à des essais consistant à essayer d'arracher manuellement, à l'aide d'une languette dont elles sont munies, les capsules formées à partir des complexes.

On constate que le complexe AA n'est pas pelable et que les complexes BB et CC sont facilement pelables.
2. Essais quantitatifs
On mesure les efforts nécessaires pour l'arrachage de la capsule scellée sur un appareil d'essais en traction de matières plastiques Instron, ledit appareil étant muni d'un équipement spécial maintenant la bouteille solidement par son goulot dans une mâchoire inférieure mobile, une mâchoire supérieure fixe immobilisant la capsule par la languette.
L'effort d'arrachage est exercé dans un plan sensiblement perpendiculaire au plan de soudage de la capsule sur le goulot.
Les résultats des essais sont donnés dans le tableau III ci-après.

Tableau III

| Complexe | Force d'arrachage en daN | Remarque |
|---|---|---|
| AA | 1,7 | la capsule se déchire |
| BB | 1 | la capsule est arrachée entièrement sans déchirure |
| CC | 0,7 | id° |

Cet exemple montre que le procédé selon l'invention permet l'obtention de complexes bicouches utilisables comme capsules hermétiques pour récipients, ces capsules pouvant être pelables.

Exemple 4
Cet exemple concerne des essais d'adhérence effectués sur les complexes tricouches préparés dans l'exemple 2.
On effectue sur les complexes des essais d'adhérence du type «peeling», qui consistent à mesurer les forces d'adhérence des films de polyéthylène – ou de polypropylène – et d'aluminium, lorsqu'ils sont soumis à des forces de traction opposées, le complexe étant maintenu perpendiculaire aux forces agissantes.

On mesure l'adhérence «peeling», qui est la force moyenne par unité de largeur d'éprouvette nécessaire pour provoquer une séparation de deux films, lorsque les deux films sont écartés à une vitesse uniforme de 120 mm/minute.
On a donné dans le tableau IV ci-après les résultats obtenus.

Tableau IV

| Complexe | Adhérence en daN/10 mm |
|---|---|
| AAA | 0,800 g |
| BBB | 0,700 g |
| CCC | 0,500 g |

Les valeurs obtenues peuvent être considérées comme bonnes. Le procédé selon l'invention permet donc d'obtenir des complexes tricouches où les couches ont une bonne adhérence ce qui est intéressant pour une utilisation ultérieure.

**Revendications**

1. Procédé de préparation de suspension d'au moins un polymère, ce procédé comprenant une première étape de préparation d'une première suspension d'au moins un polymère dans un liquide organique, par trempe d'une solution dudit polymère, et étant caractérisé en ce que, dans une seconde étape, on ajoute à la première suspension de polymère, une poudre d'au moins un polymère, identique ou non au précédent.

2. Procédé selon la revendication 1, caractérisé en ce que la quantité de polymère ajoutée lors de la seconde étape est telle que la concentration finale de la suspension soit comprise entre 10 et 25% en poids.

3. Procédé selon l'une des revendications 1 et 2, caractérisé en ce que ladite poudre de polymère a une granulométrie comprise entre 5 et 80 micromètres.

4. Procédé selon l'une des revendications 1 à 3, caractérisé en ce que les polymères utilisés lors de la première et la seconde étapes sont identiques et constitués par un copolymère greffé obtenu par polymérisation de l'éthylène et greffage d'acide acrylique.

5. Procédé selon l'une des revendications 1 à 3, caractérisé en ce que les polymères utilisés lors de la première étape et les polymères utilisés lors de la seconde étape sont identiques et sont du polyéthylène basse densité et un copolymère greffé obtenu par polymérisation de l'éthylène et greffage d'acide acrylique.

6. Procédé selon l'une des revendications 1 à 3, caractérisé en ce que les polymères utilisés lors de la première étape et la seconde étape sont identiques et sont deux copolymères greffés obtenus par polymérisation respectivement de l'éthylène et du propylène et par greffage d'acide acrylique.

7. Les suspensions obtenues par un procédé selon l'une des revendications 1 à 6.

8. Application des suspensions selon la revendication 7 à la réalisation de complexes bicouches composés d'une feuille d'aluminium et d'une couche de polymère.

9. Application des suspensions selon la revendication 8 à la réalisation de complexes tricouches composés d'une feuille d'aluminium et de deux couches de polymères.

## Patentansprüche

1. Verfahren zur Herstellung einer Suspension mindestens eines Polymerisates, wobei in einem ersten Schritt eine erste Suspension mindestens eines Polymerisats in einer organischen Flüssigkeit durch Abschrecken einer Lösung dieses Polymerisats hergestellt wird, dadurch gekennzeichnet, dass in einem zweiten Schritt der ersten Polymerisatsuspension ein Pulver mindestens eines Polymerisats zugegeben wird, welches mit dem vorhergehenden Polymerisat identisch oder nicht identisch ist.

2. Verfahren nach Anspruch 1, dadurch gekennzeichnet, dass beim zweiten Schritt eine solche Polymerisatmenge zugegeben wird, dass die Endkonzentration der Suspension zwischen 10 und 25 Gew.-% liegt.

3. Verfahren nach Anspruch 1 oder 2, dadurch gekennzeichnet, dass das Polymerisatpulver eine Teilchengrössenverteilung zwischen 5 und 80 Mikrometer aufweist.

4. Verfahren nach Anspruch 1, 2 oder 3, dadurch gekennzeichnet, dass das beim ersten Schritt verwendete Polymerisat und das beim zweiten Schritt verwendete Polymerisat identisch sind und aus einem Pfropfcopolymerisat bestehen, welches durch Polymerisation von Äthylen und Aufpfropfen von Acrylsäure erhalten worden ist.

5. Verfahren nach Anspruch 1, 2 oder 3, dadurch gekennzeichnet, dass die beim ersten Schritt verwendeten Polymerisate und die beim zweiten Schritt verwendeten Polymerisate identisch und Polyäthylen niedriger Dichte sowie ein Pfropfcopolymerisat sind, welches durch Polymerisation von Äthylen und Aufpfropfen von Acrylsäure erhalten worden ist.

6. Verfahren nach Anspruch 1, 2 oder 3, dadurch gekennzeichnet, dass die beim ersten Schritt verwendeten Polymerisate und die beim zweiten Schritt verwendeten Polymerisate identisch und zwei Pfropfcopolymerisate sind, welche durch Polymerisation von Äthylen bzw. Propylen und Aufpfropfen von Acrylsäure erhalten worden sind.

7. Die nach dem Verfahren gemäss einem der Ansprüche 1 bis 6 erhaltenen Suspensionen.

8. Verwendung der Suspensionen nach Anspruch 7 zur Herstellung von zweischichtigen Verbundprodukten bestehend aus einer Aluminiumfolie und einer Polymerisatschicht.

9. Verwendung der Suspensionen nach Anspruch 7 zur Herstellung von dreischichtigen Verbundprodukten bestehend aus einer Aluminiumfolie und zwei Polymerisatschichten.

## Claims

1. A process for preparing a suspension of at least one polymer, this process comprising a first step for preparing a first suspension of at least one polymer in an organic liquid, by steeping a solution of said polymer, and being characterized in that, in a second step, to the first polymer suspension is added a powder of at least one polymer, identical or not to the preceding one.

2. Process according to claim 1, characterized in that the amount of polymer added during the second step is such that the final concentration of the suspension is between 10 and 25% by weight.

3. The process according to one of claims 1 and 2, characterized in that said polymer powder has a grain size between 5 and 80 micrometers.

4. The process according to one of claims 1 to 3, characterized in that the polymers used for the first and second steps are identical and formed by a grafted copolymer obtained by polymerzation of ethylene and grafting of acrylic acid.

5. The process according to one of claims 1 to 3, characterized in that the polymers used during the first step and the polymers used during the second step are identical and are low density polyethylene and a grafted copolymer obtained by polymerization of ethylene and grafting of acrylic acid.

6. The process according to one of claims 1 to 3, characterized in that the polymers used during the first step and the second step are identical and are two grafted copolymers and are obtained by polymerization respectively of ethylene and propylene and by grafting of acrylic acid.

7. The suspensions obtained by a process according to one of claims 1 to 6.

8. Application of the suspensions according to claim 7, to the formation of twin-layer complexes formed from an aluminium foil and a polymer layer.

9. Application of the suspensions according to claim 8 to the formation of three-layer complexes formed of an aluminium foil and two polymer layers.